# EUROPÄISCHE PATENTSCHRIFT

(11) **EP 1 232 079 B1**
(45) Veröffentlichungstag und Bekanntmachung des Hinweises auf die Patenterteilung: **19.10.2005**
(21) Anmeldenummer: 00983154.6
(22) Anmeldetag: 23.11.2000
(51) Int. Cl.: B60S 9/02

(54) **STÜTZVORRICHTUNG**
SUPPORT DEVICE
DISPOSITIF D'APPUI

(30) Priorität: 27.11.1999 DE 19957239
(43) Veröffentlichungstag der Anmeldung: 21.08.2002
(73) Patentinhaber: Jost-Werke GmbH & Co. KG, 60528 Frankfurt am Main (DE)
(72) Erfinder: ALGÜERA GALLEGO, José Manuel, 63739 Aschaffenburg (DE); MÜLLER, Gerald, 63179 Obertshausen (DE); PFISTER, Steffen, 63225 Langen (DE)
(74) Vertreter: Fuchs Mehler Weiss & Fritzsche
(86) Internationale Anmeldenummer: PCT/EP2000/011665
(87) Internationale Veröffentlichungsnummer: WO 2001/040036

(56) Entgegenhaltungen:
- EP-A- 0 322 634
- DE-A- 3 306 789
- US-A- 3 751 067
- US-A- 3 989 276

## Beschreibung

Die Erfindung betrifft eine Stützvorrichtung für Sattelauflieger mit einem Stützbein, an dessen unterem Ende eine Fußaufnahmeeinrichtung befestigt ist, und mit einem Stützfuß mit einer Fußplatte, die mittels zweier vertikaler Platten an der Fußaufnahmeeinrichtung in vertikaler Richtung beweglich und schwenkbar gelagert ist, und mit mindestens einem zwischen Fußplatte und Fußaufnahmeeinrichtung angeordneten Dämpfungselement.

Stützvorrichtungen sind an der Unterseite von Sattelaufliegern in deren vorderen Bereichen in der Regel paarweise angeordnet und kommen immer dann zum Einsatz, wenn der Sattelauflieger von seiner Zugmaschine getrennt und für sich abgestellt wird. Bei luftgefederten Sattelaufliegern ist es bekannt, daß nach einer mehr oder weniger langen Standzeit Luft aus den Federn entweicht, was zur Folge hat, daß der Heckbereich des Sattelaufliegers absackt, so daß dieser eine schräge bzw. nach hinten geneigte Stellung in bezug auf den Boden einnimmt. Zu diesem Zweck müssen die Stützfüße bzw. deren Fußplatten schwenkbar angeordnet sein, um diese Schräglage auszugleichen. Das gleiche gilt auch, wenn der Sattelauflieger auf unebenem Gelände abgestellt wird. Zusätzlich zur Schwenkbarkeit des Fußes bzw. der Fußplatte ist es wünschenswert, daß beim Ausfahren der Stützvorrichtungen die beweglichen Teile der Stützvorrichtung sanft auf dem Boden aufsetzen, um Beschädigungen zu vermeiden. Hierzu sind in den Stützfüßen entsprechende Dämpfungselemente vorgesehen.

Da es sehr schwierig ist, all diesen Randbedingungen mit nur einer Fußausführung gerecht zu werden, werden in der Regel je nach Einsatzbedingungen unterschiedliche Fußvarianten verwendet.

Die benötigte Ausführung muß im Regelfall vor dem Kauf der Stützwinde festgelegt werden, da der Stützfuß Bestandteil davon ist und dementsprechend darauf zu montieren ist.

Die unterschiedliche Ausführung des Fußes bedingt meist auch unterschiedliche Vorkehrungen und Vorbearbeitungsstufen an der Stützwinde selbst. Dadurch entsteht für jeden Fußtyp eine jeweils spezifische Stützwindenausführung. Dies hat zwar den Vorteil, daß Fuß und Stützwinde optimal aufeinander abgestimmt werden können, es ergeben sich aber auch einige Nachteile.

So müssen im Fertigungsprozeß der Stützwinde sehr viele für jeden Typ unterschiedliche Arbeiten durchgeführt werden, was einen entsprechenden Aufwand an Werkzeugen, Vorrichtungen, Bevorratung von Material, Platzbedarf und Logistik erfordert. Zudem hat der Endverbraucher oder der Zwischenhändler nach der Herstellung der Stützwinde im Regelfall nicht mehr die Möglichkeit, unterschiedliche Fußtypen gegeneinander auszutauschen.

Es ist daher sinnvoll, Fußtypen zu entwickeln, die möglichst vielseitig sind und demnach eine große Bandbreite in ihren Anwendungen aufweisen.

Zum heutigen Stand der Technik gehört eine Fußausführung, die im wesentlichen ein starres Gebilde ist, das über eine tellerförmige Aufstandsfläche verfügt und um eine Achse, die im Innenrohr der Stützwinde horizontal und quer zur Fahrtrichtung gelagert ist, schwenken kann. Der Stützfuß kann sich gewissen Neigungen der Fahrbahn, z.B. Auffahrrampen, Steigungen und ähnlichen anpassen und somit das Abstellen des Sattelaufliegers ermöglichen.

Durch die an sich steife Ausführung des Stützfußes werden jedoch Stoßbelastungen, wie sie beispielsweise beim Rangieren der Auflieger auftreten, direkt auf die Stützwinde und mittelbar auch auf das Fahrzeug übertragen. Dies kann auf Dauer zu Funktionsstörungen oder sogar Beschädigungen an beiden führen.

Um solche Beschädigungen zu reduzieren oder gar zu vermeiden, gibt es Fußtypen, die über elastische Elemente verfügen, die die kinematische Energie des Stoßes aufnehmen und somit die mechanischen Bauteile schützen sollen.

Aus der DE 31 19 359 A1 ist eine Stützvorrichtung bekannt, bei der am unteren Ende des ausfahrbaren Stützenteils eine dieses Stützenteil seitlich überragende Bodenplatte vorgesehen ist, wobei zwischen dieser Bodenplatte und der Fußplatte ein elastischer Druckkörper, der auch als Dämpfungselement bezeichnet wird, aus Gummi angeordnet ist. Ein an der Fußplatte angeschweißter Haltering übergreift mit einem oberen Randabschnitt den seitlich abstehenden ringförmigen Teil der Bodenplatte, wobei zwischen dem Haltering und dem ausfahrbaren Stützenteil ein gewisses Spiel vorhanden ist. Der Schwenkwinkel und der Federweg der Fußplatte wird durch die Zusammendrückbarkeit des elastischen Druckkörpers und dem Abstand zwischen dem Haltering und dem ausfahrbaren Stützenteil begrenzt. Eine Schwenklagerung ist bei dieser Stützvorrichtung nicht vorgesehen. Diese Konstruktion ermöglicht nur eine begrenzte Anpassung der Fußplatte an größere Bodenunebenheiten, wobei das Dämpfungselement sowohl beim Aufsetzen des Fußes in vertikaler Richtung als auch durch ein Verkippen des Fußes deformiert wird.

Aus der EP 0 430 643 A2 ist ein Stützfuß bekannt, bei dem die Befestigung an der Fußaufnahmeeinrichtung mit der Schwenklagerung des Fußes identisch ist. Ein rohrförmiges Lagerelement ist in einem rechteckigen Gehäuse der Fußaufnahmeeinrichtung angeordnet und in Langlöchern von zwei vertikalen, auf der Fußplatte befestigten Platten in vertikaler Richtung beweglich gehalten. Zwischen dem Gehäuse und der Fußplatte ist ein Dämpfungselement angeordnet, das beim Aufsetzen des Fußes komprimiert wird. Durch ein Verschwenken des Fußes erfolgt eine zusätzliche Deformation in Querrichtung, wobei sich das Gehäuse über das Dämpfungselement schieben muß. Diese Anordnung besitzt mehrere Nachteile.

Das Dämpfungselement wird erheblichen unterschiedlichen Belastungen ausgesetzt, was zu schneller Materialermüdung führt. Der Schwenkvorgang wird durch das Dämpfungselement behindert und begrenzt. Beim Einfahren des Stützfußes bleibt dieser in seiner verschwenkten Stellung, weil das Dämpfungselement ein Zurückschwenken in die Ausgangslage verhindert. Beim wiederholten Absenken des Stützfußes kann dies zu Behinderungen und Beschädigungen des Fußes führen.

In der US-3,666,290 wird ein Stützfuß beschrieben, bei dem zwischen einer an der Stirnseite des Stützrohres angebrachten Platte und der Fußplatte zwei Dämpfungselemente angeordnet sind. Oberhalb der Dämpfungselemente ist eine Schwenklagerung vorgesehen, die aus einem durch das Stützrohr gesteckten Bolzen besteht, der in vertikaler Richtung in zwei Langlöchern von zwei auf der Fußplatte befestigten vertikalen Platten beweglich angeordnet sind. Auch bei dieser Stützfußanordnung werden die Dämpfungselemente beim Verschwenken zusätzlich deformiert, wodurch der Schwenkwinkel begrenzt wird.

Ausgehend von der US-3,666,290 ist es Aufgabe der Erfindung, eine Stützvorrichtung zu schaffen, deren Stützfuß eine verbesserte Schwenkbarkeit aufweist, wobei das Dämpfungselement einer geringeren Deformation unterworfen werden soll.

Diese Aufgabe wird mit einer Stützvorrichtung gelöst, bei der das Dämpfungselement an der Unterseite der Fußaufnahmeeinrichtung unverschwenkbar angeordnet ist und sich auf einer Kurvenplatte abstützt, die auf der Fußplatte befestigt ist, wobei die Kontur der Kurvenplatte an die Schwenkbewegung der Fußplatte bezüglich des Stützbeines angepaßt ist.

Durch die ortsfeste Anordnung des Dämpfungselementes an der Unterseite der Fußaufnahmeeinrichtung macht das Dämpfungselement beim Verschwenken des Fußes die Schwenkbewegung nicht mit. Das Dämpfungselement wird somit in jeder Schwenkstellung in lediglich vertikaler Richtung komprimiert. Durch die Kurvenplatte wird in jeder Schwenkstellung gewährleistet, daß sich das Dämpfungselement optimal abstützen kann.

Das Dämpfungselement kann an der Unterseite der Fußaufnahmeeinrichtung befestigt sein oder gemäß einer bevorzugten Ausführungsform mittels einer Halterung an der Schwenklagereinrichtung befestigt sein.

Die Halterung, die aus zwei länglichen Halteplatten bestehen kann, ist in der Schwenklagereinrichtung in vertikaler Richtung beweglich angeordnet, um sich bei Belastung bis zu einem Anschlag nach oben bewegen zu können, wobei das Dämpfungselement komprimiert wird. Der Anschlag kann beispielsweise durch Langlöcher gebildet werden, in denen sich die vorzugsweise Bolzen der Schwenklagereinrichtung in vertikaler Richtung bewegen.

Damit das Dämpfungselement ortsfest unter der Fußaufnahmeeinrichtung angeordnet bleibt, insbesondere bei der zwei Halteplatten aufweisenden Ausführungsform, ist mindestens ein Stabilisierungsnocken an der Fußaufnahmeeinrichtung angeordnet, der an dem Dämpfungselement angreift.

Vorteilhafterweise besteht das Dämpfungselement aus einer Rolle aus elastischem Material. Eine Rolle bietet den Vorteil, daß die Auflagefläche auf der Kurvenplatte im Vergleich zu plattenförmigen Dämpfungselementen gering ist, so daß dann, wenn die Rolle nicht drehbar gelagert ist, beim Verschwenken nur geringe Reibungskräfte auftreten, was es ermöglicht, daß der Fuß beim Anheben wieder in seine Ausgangsstellung zurückschwenken kann.

Dieser Vorgang wird dann erleichtert, wenn die Rolle gemäß einer weiteren Ausführungsform drehbar in der Halterung befestigt ist. Dadurch wird das Material der Rolle auch beim Verschwenken geschont, weil die Rolle auf der Oberfläche der Kurvenplatte beim Verschwenken abrollen kann.

Die Längsachse der Rolle ist vorzugsweise parallel zur Schwenkachse des Stützfußes angeordnet.

Vorzugsweise weist die Kurvenplatte an der dem Dämpfungselement zugewandten Seite eine konkave Oberfläche auf.

Die Stützvorrichtung bietet den Vorteil, daß der Verschleiß des Dämpfungselementes gering ist. Der Schwenkwinkel des Stützfußes ist weitaus größer als bei bekannten Stützfüßen, die ein Dämpfungselement aufweisen, weil das Dämpfungselement den Schwenkvorgang nicht behindert. Durch die schwenkbare Befestigung des Stützfußes in der Schwenklagereinrichtung am Stützbein wird eine stabile Anordnung geschaffen, so daß auch Querkräfte sicher aufgenommen werden können.

Vorteilhafte Ausführungsformen der Erfindung werden nachfolgend anhand der Zeichnungen näher erläutert.

Es zeigen:
- Figur 1: eine Seitenansicht der Stützvorrichtung mit Stützfuß,
- Figur 2: eine weitere Seitenansicht der in Figur 1 gezeigten Stützfußanordnung im unbelasteten Zustand,
- Figuren 3 und 4: Seitenansichten der in den Figuren 1 und 2 gezeigten Ausführungsform im belasteten Zustand,
- Figur 5: eine Seitenansicht entsprechend der Figur 1 der Stützfußanordnung bei verschwenktem Stützfuß, und
- Figur 6: eine perspektivische Darstellung der Fußaufnahmeeinrichtung.

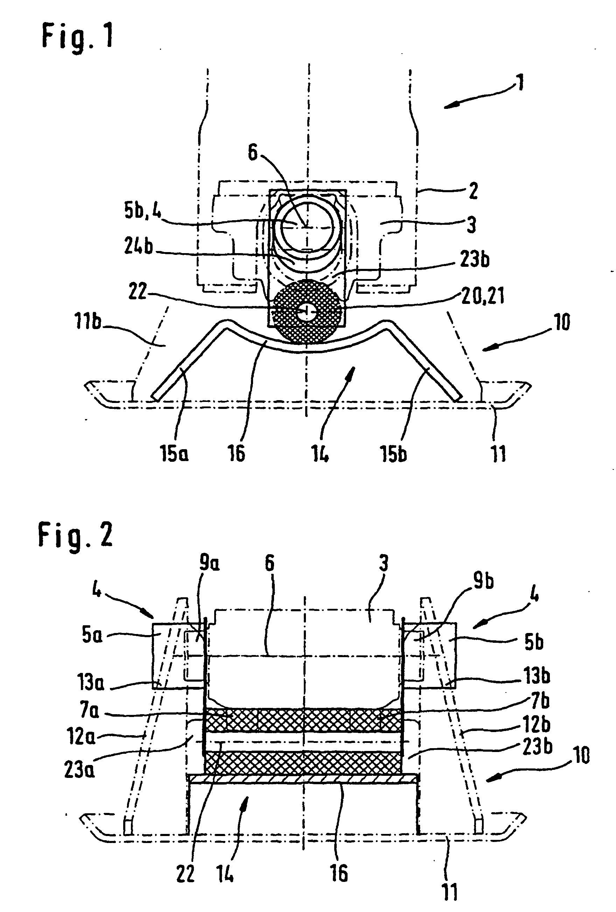

In den Figuren 1 und 2 ist das untere Ende eines Stützbeins 1 schematisch dargestellt, wobei lediglich das teleskopierbare Stützrohr 2 zu sehen ist, an dessen unterem Ende eine Fußaufnahmeeinrichtung 3 befestigt ist. Die Ausgestaltung der Fußaufnahmeeinrichtung weist, wie in der Figur 2 zu sehen ist, seitlich zwei Zapfen 9a, b mit zwei Bolzen 5a, b zur Bildung einer Schwenklagereinrichtung 4 auf, an der der Stützfuß 10 schwenkbar gelagert ist.

Der Stützfuß 10 weist eine Fußplatte 11 auf, an der zwei vertikale Platten 12a, b angeordnet sind, die in der hier gezeigten Ausführungsform eine leichte Schrägstellung aufweisen. Im Bereich der Schwenklagereinrichtung 4 besitzen die vertikalen Platten jeweils Langlöcher 13a, b, deren Längsachsen vertikal ausgerichtet sind.

An der Unterseite der Fußaumahmeeinrichtung 3 ist ein Dämpfungselement 20 in Form einer zylindrischen Rolle 21 angeordnet. Dieses Dämpfungselement kann an der Unterseite der Fußaufnahmeeinrichtung befestigt sein, es besteht aber auch die Möglichkeit, dieses Dämpfungselement mittels einer Halterung in Form von zwei Halteplatten 23a, b ortsfest, d.h. unverschwenkbar unterhalb der Fußaufnahmeeinrichtung 3 anzuordnen. Die beiden länglichen Halteplatten 23a, b besitzen ebenfalls Langlöcher 24a, b, damit bei Belastung des Stützbeins 1 die Halteplatten 23a, b sich relativ zur Schwenklagereinrichtung 4 bewegen können.

Die Halteplatten 23a, b können sich in der hier gezeigten Ausführungsform um die Schwenkachse 6 bewegen, was jedoch vorzugsweise verhindert werden soll. Hierzu sind an der Unterseite der Fußaufnahmeeinrichtung 3 vier Stabilisierungsnocken vorgesehen, wovon lediglich zwei 7a, b verdeckt zu sehen sind. Diese Nocken umgreifen von oben das elastische Material der Rolle 21, so daß diese auch unter Belastung unverrückbar unterhalb der Fußaufnahmeeinrichtung 3 gehalten wird. Die Längsachse 22 des Dämpfungselementes 20 liegt unterhalb und parallel zur Schwenkachse 6 der Schwenklagereinrichtung.

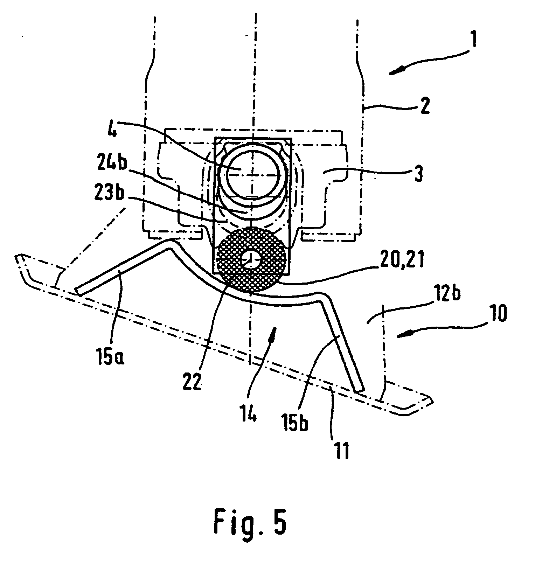

Das Dämpfungselement 20 stützt sich auf einer Kurvenplatte 14 ab, die zwei schräge Seitenteile 15a, b aufweist, die auf der Fußplatte 11 befestigt sind. Zwischen den beiden Seitenteilen 15a, b ist ein konkaves Mittelteil angeordnet, auf dem die Rolle 21 aufliegt. Der Krümmungsradius dieses konkaven Mittelteils entspricht in etwa dem Abstand zwischen der Schwenklagerachse 6 und der Oberfläche des konkaven Mittelteils 16. Dadurch wird gewährleistet, daß auch bei einem Verschwenken des Fußes 10, wie dies in Figur 5 dargestellt ist, das Dämpfungselement 20 immer optimal auf dem konkaven Mittelteil 16 aufliegt und unter Belastung das Dämpfungselement nur in vertikaler Richtung deformiert wird.

Auf die Stabilisierungsnocken 7a, b kann dann verzichtet werden, wenn die beiden Halteplatten 23a, b im Bereich der Schwenklagereinrichtung gegen ein Verschwenken gesperrt sind. In diesem Fall kann das Dämpfungselement 20 drehbar in den Halteplatten 23a, b angeordnet sein, so daß bei einem Verschwenken des Stützfußes 10 die Rolle 21 auf der Oberseite der Kurvenplatte 14 abrollen kann.

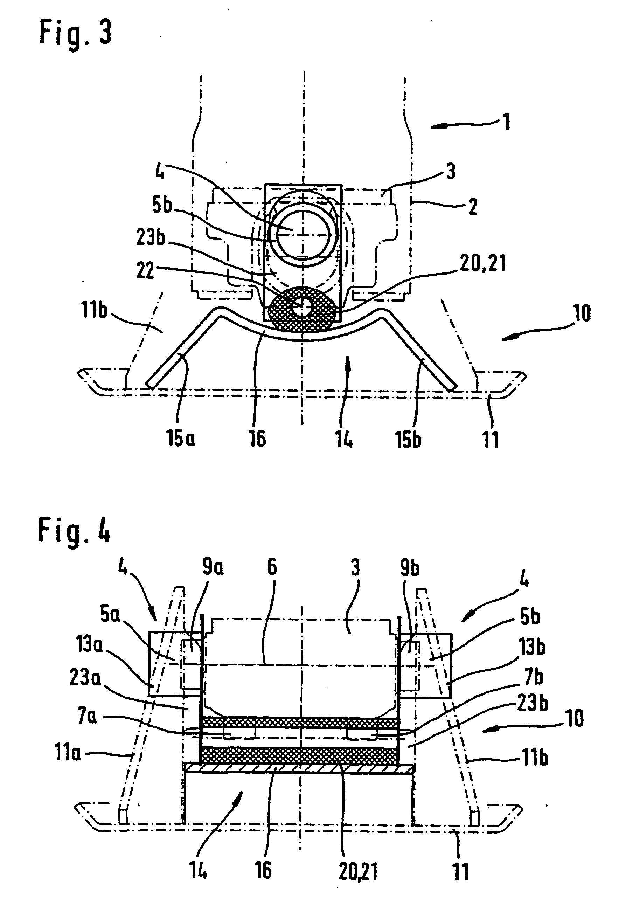

In den Figuren 3 und 4 ist der belastete Zustand nach dem Absenken des Stützbeins 1 dargestellt. Sowohl die seitlichen Platten 11a, b als auch die Halteplatten 23a, b bewegen sich relativ zum Stützrohr 2 nach oben, wodurch sich der Stützfuß 10 der Fußaumahmeeinrichtung 3 nähert. Hierbei wird das Dämpfungselement 20 komprimiert und federt somit den Abstützvorgang ab.

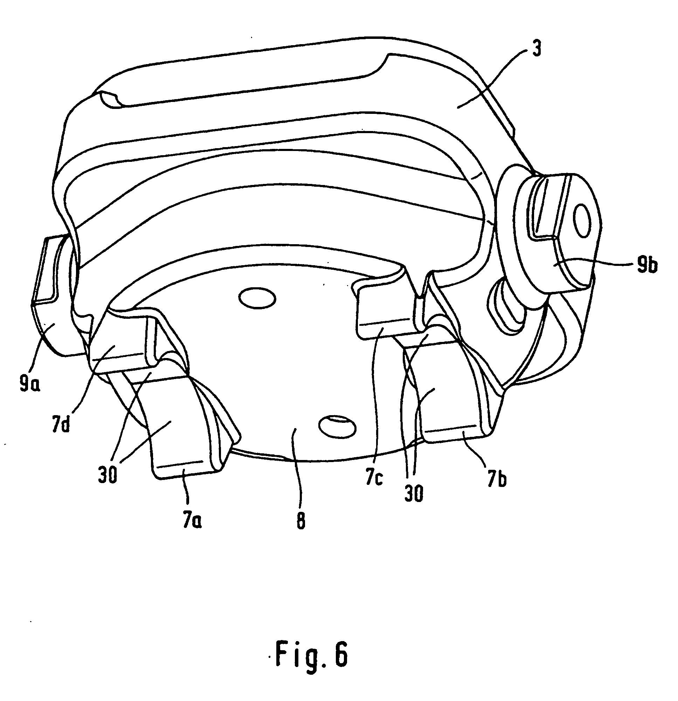

In Figur 6 ist eine perspektivische Unteransicht der Fußaufnahmeeinrichtung 3 dargestellt. Auf der Bodenwand 8 sind vier Stabilisierungsnocken 7a - d angeordnet. Jeder Nocken 7a - d besitzt eine nach unten weisende gekrümmte Fläche 30, die an dem Dämpfungselement 20 anliegt. Die Krümmung der Fläche 30 ist an die Zylinderform der Rolle 21 angepaßt. Jeweils zwei Nocken 7a, d und 7b, c umgreifen paarweise die Rolle 21 und verhindern somit die Seitwärtsbewegung des Dämpfungselements 20.

## Patentansprüche

1. Stützvorrichtung für Sattelauflieger mit einem Stützbeine (1), an dessen unterem Ende eine Fußaufnahmeeinrichtung (3) befestigt ist, und mit einem Stützfuß (10) mit einer Fußplatte (11), die mittels zweier vertikaler Platten (12a, 12b) an der Fußaufbahmeeinrichtung (3) in vertikaler Richtung beweglich und schwenkbar gelagert ist, und mit mindestens einem zwischen Fußplatte (11) und Fußaufnahmeinrichtung (3) angeordneten Dämpfungselement (20), **dadurch gekennzeichnet,**
**daß** das Dämpfungselement (20) an der Unterseite der Fußaufnahmeinrichtung (3) unverschwenkbar angeordnet ist und sich auf einer Kurvenplatte (14) abstützt, die auf der Fußplatte (11) befestigt ist und, wobei die Kontur der Kurvenplatte (14) an die Schwenkbewegung der Fußplatte (11) bezüglich des Stützbeins (1) angepaßt ist.

2. Stützvorrichtung nach Anspruch 1, **dadurch gekennzeichnet, daß** das Dämpfungselement (20) an der Unterseite der Fußaufnahmeeinrichtung (3) befestigt ist.

3. Stützvorrichtung nach Anspruch 1, **dadurch gekennzeichnet, daß** das Dämpfungselement (20) mittels einer Halterung an der Schwenklagereinrichtung (4) befestigt ist.

4. Stützvorrichtung nach Anspruch 3, **dadurch gekennzeichnet, daß** die Halterung in der Schwenklagereinrichtung (4) in vertikaler Richtung beweglich angeordnet ist.

5. Stützvorrichtung nach einem der Ansprüche 1 bis 4, **dadurch gekennzeichnet, daß** das Dämpfungselement (20) eine Rolle (21) aus elastischem Material ist.

6. Stützvorrichtung nach Anspruch 5, **dadurch gekennzeichnet, daß** die Längsachse (22) der Rolle (212) parallel zur Schwenkachse (6) des Stützfußes (10) angeordnet ist.

7. Stützvorrichtung nach Anspruch 5 oder 6, **dadurch gekennzeichnet, daß** die Rolle (21) an der Unterseite der Fußaufnahmeeinrichtung (3) anliegt.

8. Stützvorrichtung nach einem der Ansprüche 5 bis 7, **dadurch gekennzeichnet, daß** die Rolle (21) drehbar in der Halterung befestigt ist.

9. Stützvorrichtung nach einem der Ansprüche 1 bis 5, **dadurch gekennzeichnet, daß** die Kurvenplatte (14) an der dem Dämpfungselement (20) zugewandten Seite eine konkave Oberfläche aufweist.

10. Stützvorrichtung nach einem der Ansprüche 1 bis 9, **dadurch gekennzeichnet, daß** an der Unterseite der Fußaufhahmeeinrichtung (3) mindestens ein Stabilisierungsnocken (7a,b) angeordnet ist, der an dem Dämpfungselement (20) angreift.

## Claims

1. Support device for semitrailers with a support leg (1), to the lower end of which a base holding device (3) is secured, and with a support base (10) with a base plate (11) which is mounted so as to be vertically mobile and pivotable by means of two upright plates (12a, 12b) at the base holding device (3), and with at least one damping element (20) which is disposed between the base plate (10) and the base holding device (3), **characterised in**
**that** the damping element (20) is disposed so as to be non-pivotable at the underside of the base holding device (3) and is supported on a curved plate (14) which is secured to the base plate (11), wherein the contour of the curved plate (14) is adapted to the pivotal movement of the base plate (11) relative to the support leg (1).

2. Support device according to Claim 1, **characterised in that** the damping element (20) is secured to the underside of the base holding device (3).

3. Support device according to Claim 1, **characterised in that** the damping element (20) is secured to the pivot bearing device (4) by means of a mount.

4. Support device according to Claim 3, **characterised in that** the mount is disposed so as to be vertically mobile in the pivot bearing device (4).

5. Support device according to any one of Claims 1 to 4, **characterised in that** the damping element (20) is a roller (21) of resilient material.

6. Support device according to Claim 5, **characterised in that** the longitudinal axis (22) of the roller (21) is disposed parallel to the pivot axis (6) of the support base (10).

7. Support device according to Claim 5 or 6, **characterised in that** the roller (21) lies against the underside of the base holding device (3).

8. Support device according to any one of Claims 5 to 7, **characterised in that** the roller (21) is secured so as to be rotatable in the mount.

9. Support device according to any one of Claims 1 to 5, **characterised in that** the curved plate (14) has a concave surface at the side which faces the damping element (20).

10. Support device according to any one of Claims 1 to 9, **characterised in that** at least one stabilising lobe (7a, b) is disposed at the underside of the base holding device (3), which lobe acts on the damping element (20).

## Revendications

1. Dispositif d'appui pour un semi-remorque comprenant une béquille (1), sur l'extrémité inférieure de laquelle un dispositif de réception de pied (3) est fixé, et comprenant un pied d'appui (10) muni d'une plaque d'embase (11) qui est montée avec mobilité en direction verticale et avec faculté de pivotement sur le dispositif de réception de pied (3) au moyen de deux plaques verticales (12a, 12b), et comprenant au moins un élément amortisseur (20) agencé entre la plaque d'embase (11) et le dispositif de réception de pied (3), **caractérisé en ce que** l'élément amortisseur (20) est agencé sans faculté de pivotement sur la face inférieure du dispositif de réception de pied (3) et s'appuie sur une plaque incurvée (14) qui est fixée sur la plaque d'embase (11), le contour de la plaque incurvée (14) étant adapté au mouvement de pivotement de la plaque d'embase (11) par rapport à la béquille (1).

2. Dispositif d'appui selon la revendication 1, **caractérisé en ce que** l'élément amortisseur (20) est fixé sur la face inférieure du dispositif de réception de pied (3).

3. Dispositif d'appui selon la revendication 1, **caractérisé en ce que** l'élément amortisseur (20) est fixé sur le dispositif à palier pivotant (4) au moyen d'une monture.

4. Dispositif d'appui selon la revendication 3, **caractérisé en ce que** la monture est agencée avec mobilité en direction verticale dans le dispositif à palier pivotant (4).

5. Dispositif d'appui selon l'une des revendications 1 à 4, **caractérisé en ce que** l'élément amortisseur (20) est un rouleau (21) constitué de matériau élastique.

6. Dispositif d'appui selon la revendication 5, **caractérisé en ce que** l'axe longitudinal (22) du rouleau (212) est agencé parallèlement à l'axe de pivotement (6) du pied d'appui (10).

7. Dispositif d'appui selon la revendication 5 ou 6, **caractérisé en ce que** le rouleau (21) vient en contact sur la face inférieure du dispositif de réception de pied (3).

8. Dispositif d'appui selon l'une des revendications 5 à 7, **caractérisé en ce que** le rouleau (21) est fixé avec faculté de rotation dans la monture.

9. Dispositif d'appui selon l'une des revendications 1 à 5, **caractérisé en ce que** la plaque incurvée (14) présente une surface concave sur le côté tourné vers l'élément amortisseur (20).

10. Dispositif d'appui selon l'une des revendications 1 à 9, **caractérisé en ce qu'**au moins une came de stabilisation (7a, b) est agencée sur la face inférieure du dispositif de réception de pied (3), laquelle attaque l'élément amortisseur (20).
